Europäisches Patentamt

European Patent Office

Office européen des brevets

(19)

(11) **EP 1 324 253 A1**

(12) **DEMANDE DE BREVET EUROPEEN**

(43) Date de publication:
**02.07.2003 Bulletin 2003/27**

(51) Int Cl.⁷: **G06F 17/60**, G01W 1/06

(21) Numéro de dépôt: **02292066.4**

(22) Date de dépôt: **21.08.2002**

(84) Etats contractants désignés:
**AT BE BG CH CY CZ DE DK EE ES FI FR GB GR
IE IT LI LU MC NL PT SE SK TR**
Etats d'extension désignés:
**AL LT LV MK RO SI**

(30) Priorité: **28.12.2001 FR 0116993**

(71) Demandeur: **METEO FRANCE-Etablissement
public de l'état à caractère administratif, placé
sous la tutelle du ministre chargé des transports
75007 Paris (FR)**

(72) Inventeur: **Dreveton, Christine, METEO FRANCE
31057 Toulouse Cedex (FR)**

(74) Mandataire: **Texier, Christian et al
Cabinet Régimbeau
20, rue de Chazelles
75847 Paris cedex 17 (FR)**

(54) **Procede pour fournir un indice meteorologique**

(57)     Le procédé pour fournir un indice météorologique comprend les étapes consistant à :

- mesurer au moins un phénomène météorologique à au moins une position géographique (6) pour obtenir au moins une donnée météorologique;

- obtenir au moins une donnée dite humaine liée à au moins une grandeur de nature économique ou démographique concernant au moins une zone géographique (4) incluant la position respective (6); et

- calculer un indice à partir de ces données.

FIG_1

EP 1 324 253 A1

**Description**

L'invention concerne l'étude des phénomènes météorologiques et climatiques et de leurs conséquences sur les activités industrielles et économiques.

Il est connu que les conditions météorologiques courantes peuvent présenter au quotidien une forte variabilité, et que celle-ci peut avoir des incidences sur l'activité économique de la région touchée par ces conditions.

Par exemple, au cours du mois de décembre qui est un mois économiquement important, le cumul des précipitations à Paris était de 85 mm en 1978 et de 0 mm en 1991. Au mois de mars, tout aussi important au plan économique, la température moyenne à Paris était de - 0,2°C en 1971 et de 11,2°C en 1977 ou en 1997. Enfin, d'un jour à l'autre, les conditions météorologiques peuvent également présenter des variations importantes. On parle notamment du caractère volatile de la température. Ainsi la température minimale relevée sur la ville de Dax était de 18,4°C le mercredi 3 octobre 2001 et seulement de 9,6°C le jeudi 4 octobre 2001. On précise par ailleurs que la température normale pour ces deux jours avoisine les 11,5°C.

On conçoit alors aisément qu'une entreprise ayant des activités industrielles et économiques a tout intérêt à tenir compte des conditions météorologiques dans sa gestion quotidienne. A titre d'exemple, on a pu montrer que la consommation de bière présentait une bonne corrélation avec les fluctuations de température. Ainsi, si l'on considère l'écart de la température maximale par rapport à la normale mensuelle et les variations de vente de bières autour d'une moyenne mensuelle, il ressort qu'une augmentation de 1°C de la température maximale engendre une augmentation de 1,2 % des ventes dans le Nord de la France et jusqu'à 5,2% dans le Sud-est. Plus généralement, on estime aujourd'hui que 60 à 70 % du produit intérieur brut est affecté par les variations météorologiques. Par exemple, dans l'agriculture, les producteurs de café, de céréales et de vins voient leur activité industrielle directement soumise aux mauvaises conditions climatiques aussi bien aux stades de la production et de la récolte que de la distribution. Dans le secteur textile, la fabrication et la vente de produits saisonniers tels que les maillots de bain ou les manteaux sont également corrélées aux conditions météorologiques. Ainsi l'arrivée tardive de l'été peut entraîner une réduction des ventes lorsque les températures sont encore hivernales. Enfin, dans les secteurs liés à la production d'énergie (nucléaire, gaz, pétrole,...), la production est intimement liée aux conditions météorologiques. Par exemple, le seuil de 18°C est utilisé comme référence dans l'industrie du chauffage et de la climatisation et dans le secteur de la distribution d'énergie à travers des paramètres tels que les CDD (*cooling degree day* ou degré jour froid) ou HDD (*heating degree day* ou degré jour chaud) qui servent d'indices permettant de planifier et de calculer les besoins en énergie. Ainsi les producteurs d'énergie peuvent ajuster les besoins en énergie à partir des données statistiques disponibles telles que les normales. De tels outils apparaissent par exemple dans la demande WO-00/21015.

Toutefois, ces instruments apparaissent très insuffisants. Il existe aujourd'hui une forte demande pour des outils permettant d'adapter plus étroitement les activités industrielles en fonction des conditions météorologiques.

Un but de l'invention est de permettre aux industries d'adapter leur activité plus étroitement en fonction des variations du temps.

A cet effet on prévoit selon l'invention un procédé pour fournir un indice météorologique comprenant les étapes consistant à :

- mesurer au moins un phénomène météorologique à au moins une position géographique pour obtenir au moins une donnée météorologique;
- obtenir au moins une donnée dite humaine liée à au moins une grandeur de nature économique ou démographique concernant au moins une zone géographique incluant la position respective; et
- calculer un indice à partir de ces données.

Ainsi l'indice fourni prend en compte non seulement une donnée relative à un phénomène météorologique mais en outre une grandeur de nature économique ou démographique, ce qui permet de mettre l'indice concernant la zone géographique plus étroitement en rapport avec l'activité économique et industrielle de cette zone. Cet indice constitue donc un outil plus pertinent pour permettre aux industries d'adapter leur activité en fonction des fluctuations de l'atmosphère.

Le procédé pourra en outre présenter au moins l'une quelconque des caractéristiques suivantes :

- l'obtention met en oeuvre l'obtention de plusieurs données météorologiques concernant respectivement plusieurs positions géographiques ;
- l'obtention met en oeuvre l'obtention de plusieurs données humaines concernant respectivement plusieurs zones ;
- le calcul met en oeuvre le calcul d'une moyenne des données météorologiques pondérées par les données humaines ;
- la ou chaque donnée météorologique est une moyenne de données météorologiques élémentaires concernant une période prédéterminée ;

- le calcul met en oeuvre le calcul de plusieurs indices élémentaires au moyen des données météorologiques et humaines, et le calcul de l'indice à partir des indices élémentaires, de préférence sous la forme d'une moyenne des indices élémentaires ;
- les indices élémentaires concernent des périodes différentes ;
- la ou les périodes sont choisies dans le groupe consistant en : une année, un semestre, un trimestre, un mois, une semaine et un jour ;
- la ou l'une des données météorologiques est en relation avec :

  - une température de l'air atmosphérique;
  - un degré d'humidité de l'air atmosphérique;
  - une quantité de précipitation;
  - une quantité de brouillard;
  - une température d'une étendue d'eau; ou
  - une vitesse du vent ;

- la zone géographique est choisie parmi le groupe consistant en: un Etat, une région, un département, une municipalité, une commune ;
- la position géographique est une agglomération, de préférence l'agglomération pour laquelle la grandeur atteint un extremum par rapport à d'autres agglomérations de la zone correspondante ; et
- la grandeur est la population de la zone géographique.

On prévoit également selon l'invention une installation pour fournir un indice météorologique comprenant :

- des moyens pour obtenir au moins une donnée météorologique liée à au moins un phénomène météorologique se produisant à au moins une position géographique;
- des moyens pour obtenir au moins une donnée dite humaine liée à au moins une grandeur de nature économique ou démographique concernant au moins une zone géographique incluant la position respective; et
- des moyens de calcul d'un indice à partir de ces données.

Avantageusement, l'installation comprend des moyens de mesure du phénomène météorologique.
On prévoit également selon l'invention un dispositif informatique automatisé pour fournir un indice météorologique, programmé pour mettre en oeuvre les étapes consistant à :

- obtenir au moins une donnée météorologique liée à au moins un phénomène météorologique se produisant à au moins une position géographique;
- obtenir au moins une donnée dite humaine liée à au moins une grandeur de nature économique ou démographique concernant au moins une zone géographique incluant la position respective; et
- calculer un indice à partir de ces données.

On prévoit également selon l'invention un support d'enregistrement d'un programme informatique pour fournir un indice météorologique, le programme étant apte à mettre en oeuvre les étapes consistant à :

- obtenir au moins une donnée météorologique liée à au moins un phénomène météorologique se produisant à au moins une position géographique;
- obtenir au moins une donnée dite humaine liée à au moins une grandeur de nature économique ou démographique concernant au moins une zone géographique incluant la ou les positions respectives; et
- calculer un indice à partir de ces données.

Un inconvénient des indices météorologiques de l'art antérieur est qu'ils nécessitent d'obtenir un grand nombre de données relatives à la zone géographique considérée pour disposer d'un indice propre à cette zone. Or la collecte et le traitement de ces données peuvent être fastidieux.
Un autre but de l'invention est de faciliter la fourniture d'indices locaux.
A cet effet, on prévoit selon l'invention un procédé pour fournir au moins un indice météorologique, comprenant les étapes consistant à :

- mesurer au moins un phénomène météorologique à au moins une position géographique primaire pour obtenir au moins une donnée; et
- calculer au moins un indice météorologique relatif à au moins une position géographique secondaire à partir de la donnée, des données, ou de l'une des données.

Le procédé pourra en outre présenter au moins l'une quelconque des caractéristiques suivantes :

- il comprend les étapes préalables consistant à :

  - étudier un degré de corrélation entre des données initiales relatives aux positions primaires et des indices initiaux relatifs aux positions secondaires; et
  - associer à chaque position secondaire une des positions primaires, l'étape de calcul étant mise en oeuvre en calculant chaque indice à partir de la seule donnée ou des seules données correspondant à la position primaire associée ;

- l'étape d'obtention met en oeuvre l'obtention d'au moins deux données concernant deux positions géographiques primaires respectives ;
- l'étape de calcul met en oeuvre le calcul de l'indice à partir d'une seule des deux données, cette donnée concernant l'une prédéterminée des positions géographiques ;
- il est mis en oeuvre de façon à fournir au moins deux indices relatifs à deux positions géographiques secondaires respectives ;
- il est mis en oeuvre de façon à fournir un nombre d'indices supérieur au nombre de données ; et
- l'étape de calcul met en oeuvre le calcul du ou de chaque indice de la ou chaque position géographique au moyen d'une formule du type :

$$y = ax + b$$

où

x est la donnée ou l'une des données ;
y est l'indice ; et
a et b sont des coefficients prédéterminés pour la position géographique.

On prévoit également selon l'invention une installation pour fournir au moins un indice météorologique, comprenant :

- des moyens pour obtenir au moins une donnée liée à au moins un phénomène météorologique se produisant à au moins une position géographique primaire; et
- des moyens de calcul d'au moins un indice météorologique relatif à au moins une position géographique secondaire à partir de la ou des données ou de l'une des données.

On prévoit également selon l'invention un dispositif informatique automatisé pour fournir un indice météorologique et programmé pour mettre en oeuvre les étapes consistant à :

- obtenir au moins une donnée liée à au moins un phénomène météorologique se produisant à au moins une position géographique primaire ; et
- calculer au moins un indice météorologique relatif à au moins une position géographique secondaire à partir de la donnée, des données ou de l'une des données.

On prévoit enfin selon l'invention un support d'enregistrement d'un programme informatique pour fournir un indice météorologique, le programme étant apte à mettre en oeuvre les étapes consistant à :

- obtenir au moins une donnée liée à au moins un phénomène météorologique se produisant à au moins une position géographique primaire, et
- calculer au moins un indice météorologique relatif à au moins une position géographique secondaire à partir de la donnée, des données ou de l'une des données.

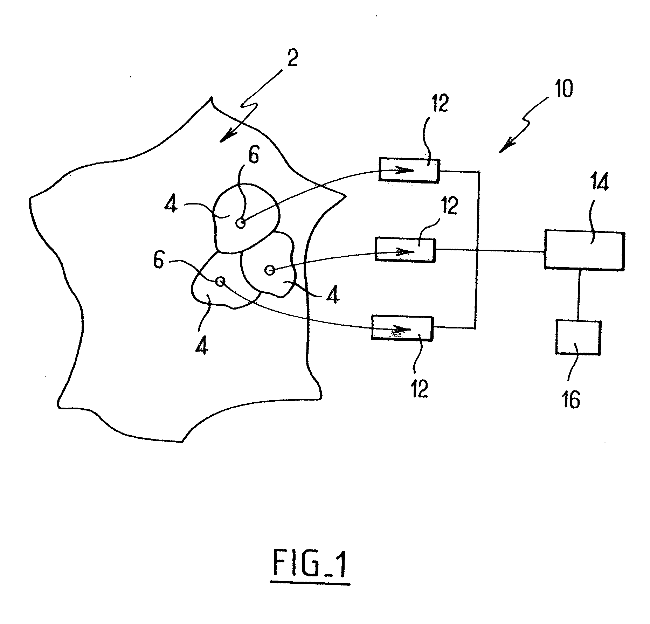

D'autres caractéristiques et avantages de l'invention apparaîtront encore dans la description suivante de plusieurs modes de réalisation donnés à titre d'exemples non limitatifs. Au dessin annexé, la figure 1 est un schéma d'une installation selon l'invention.

Nous allons décrire un premier mode de réalisation de l'invention sous la forme d'un procédé comprenant les étapes consistant à :

- mesurer au moins un phénomène météorologique à au moins une position géographique pour obtenir au moins une donnée météorologique;
- obtenir au moins une donnée humaine liée à au moins une grandeur de nature économique ou démographique concernant au moins une zone géographique incluant la position respective ; et
- calculer un indice $I_n$ à partir de ces données.

Dans le présent exemple et en référence à la figure 1, on souhaite calculer un indice national $I_n$ représentatif de la France métropolitaine 2. L'indice correspond ici à une période trimestrielle, par exemple la période s'étendant du mois de janvier au mois de mars inclus. On pourrait également par exemple s'intéresser à un indice défini sur une période semestrielle, telle que celle s'étendant du mois d'octobre au mois de mars inclus.

Pour cela, on choisit d'utiliser comme donnée météorologique la température moyenne quotidienne. Celle-ci, pour un jour J, correspond à la valeur moyenne des températures horaires (ou tri-horaires) mesurées sous abri et observées entre 0 heure UTC au jour J et 0 heure UTC au jour J+1.

Les zones géographiques 4 considérées dans le présent exemple sont les vingt-deux régions administratives de la France métropolitaine. On identifie d'autre part la ville 6 formant la plus grande agglomération de chaque région. La position géographique prise en compte dans la zone et incluse dans celle-ci est donc ici la ville la plus importante de la région.

Au moyen de stations météorologiques 12 connues en elles-mêmes et installées dans ces villes, on mesure la température plusieurs fois par jour dans chaque ville. Pour chaque ville, on calcule la température moyenne quotidienne par une moyenne arithmétique, puis on calcule une moyenne arithmétique trimestrielle des températures moyennes dans cette ville. On obtient donc vingt-deux valeurs de températures moyennes trimestrielles (une pour chacune des vingt-deux villes).

Dans le présent exemple, on utilise comme grandeur démographique concernant chaque zone ou ville 6 la population totale (c'est-à-dire le nombre d'habitants) de la région 4 incluant cette ville. On peut par exemple à cette fin consulter les résultats publiés du recensement de la population effectué en 1999 par l'INSEE.

On calcule l'indice $I_n$ comme une moyenne des températures moyennes trimestrielles des villes 6 pondérées par le nombre de personnes habitant les régions 4 respectives. On obtient donc la formule suivante :

$$I_n = \frac{\displaystyle\sum_{i=1}^{22} n_i T_i}{\displaystyle\sum_{i=1}^{22} n_i}$$

où

- $n_i$ est la population de la région 4 considérée ; et
- $T_i$ est la température moyenne trimestrielle relevée dans la ville 6 de la région considérée.

Une variante de ce mode de calcul consiste à calculer tout d'abord un indice $I_{n(jours)}$ comme une moyenne des températures moyennes quotidiennes $T_{i\,(jours)}$ des régions considérées pondérées par la population ni de ces régions :

$$I_{n(jours)} = \frac{\displaystyle\sum_{i=1}^{22} n_i T_{i(jours)}}{\displaystyle\sum_{i=1}^{22} n_i}$$

Dans un deuxième temps, l'indice national trimestriel $I_n$ est calculé sous la forme d'une moyenne arithmétique des indices quotidiens $I_{n(jours)}$.

Selon le premier procédé, on obtient pour le premier trimestre 2000 un indice de 6,4830 et pour le premier trimestre 2001 un indice de 7,2169. Les valeurs obtenues avec le deuxième procédé sont très voisines, la différence étant inférieure à 0,01.

En référence à la figure 1, ce procédé pourra être mis en oeuvre au moyen d'une installation 10 comprenant des stations météorologiques 12 implantées dans les villes à considérer pour y mesurer plusieurs fois par jour la température. L'installation comprend également un dispositif informatique automatisé 14 programmé pour mettre en oeuvre le procédé de l'invention. Il sera notamment en mesure de recevoir des informations provenant des stations 12 et ce directement ou indirectement. Il comprend par ailleurs une base de données 16 où sont enregistrées en l'espèce les valeurs de population associées à chacune des villes. Le dispositif comporte des moyens de calcul de l'indice au moyen de ces données.

Le programme informatique commandant une telle installation peut bien-sûr être enregistré sur un support d'enregistrement installé à demeure dans cette installation ou amovible.

Bien entendu, on pourra mettre en oeuvre le procédé de l'invention en utilisant comme période de calcul non pas un trimestre mais une année, un semestre, un mois, une semaine ou un jour.

De même, on pourra prendre en compte d'autres phénomènes météorologiques que la température de l'air atmosphérique, pourvu que le phénomène météorologique considéré soit pertinent à l'égard des activités industrielles concernées par l'étude. Il pourra s'agir par exemple d'un degré d'humidité de l'air atmosphérique, d'une quantité de précipitation (pluie, neige, grêle,...), d'une quantité de brouillard, d'une température d'une étendue d'eau (océan, mer, lac, rivière,...) ou d'une vitesse du vent. Il pourrait encore s'agir d'une donnée météorologique en relation avec l'un de ces phénomènes et représentant par exemple sa variation ou sa moyenne sur une période prédéterminée.

De même, la zone géographique considérée pourra être différente d'une région : il pourra s'agir d'un Etat, d'un département, d'une municipalité ou d'une commune.

La grandeur considérée pour pondérer la moyenne des températures pourra être différente de la population de la région. Il pourra s'agir par exemple d'une autre grandeur de type démographique tel que le poids relatif de telle ou telle catégorie socioprofessionnelle ou le poids relatif de telle ou telle tranche d'âge dans la population de la région. Cette grandeur pourrait également être une grandeur de nature économique telle que la richesse de cette région, la proportion de demandeurs d'emploi dans la région, etc.

On va maintenant décrire un deuxième mode de réalisation de l'invention.

Dans celui-ci, on mesure au moins un phénomène météorologique à au moins une position géographique dite primaire afin d'obtenir au moins une donnée météorologique, puis on calcule au moins un indice météorologique relatif à au moins une position géographique dite secondaire à partir de la donnée, des données ou de l'une des données précitées.

Dans le présent exemple, on cherche plus précisément à calculer comme indice météorologique la température moyenne quotidienne dans chacune des villes 6 des vingt-deux régions 4 précitées.

Pour effectuer ce calcul, on considère cinq villes de référence parmi ces vingt-deux villes. En l'espèce, les cinq villes de référence sont Paris-Orly, Lyon, Bordeaux, Strasbourg et Ajaccio. Ces villes de référence ont été sélectionnées selon une méthode qui sera expliquée plus loin. On mesure plusieurs fois par jour la température pour obtenir la température quotidienne dans chacune de ces cinq villes au moyen des stations 12 décrites dans le premier mode de réalisation et on calcule la température moyenne quotidienne dans chacune de ces cinq villes. Ces villes et leurs régions respectives forment les positions primaires. Par ailleurs, toutes les 22 villes et leurs régions respectives forment les positions secondaires.

Au moyen de la méthode qui sera expliquée plus loin, on affecte à chacune des vingt-deux villes et régions formant les positions secondaires une des villes parmi les cinq positions primaires sélectionnées. Cette affectation est faite au moyen d'une étude de corrélation qui sera expliquée plus loin. Ainsi à la région Languedoc-Roussillon on associe la ville de Lyon, à la région Limousin on associe la ville de Bordeaux, à la région Lorraine on associe la ville de Strasbourg et naturellement à la région Ile-de-France on associe la ville de Paris-Orly (chaque ville de référence étant associée à elle-même en tant que position secondaire).

Pour calculer l'indice relatif à chaque position secondaire, on peut utiliser des types très variés d'équation faisant intervenir la donnée relative à la position primaire. En l'espèce, on utilise une formule du type :

$$y = ax + b$$

où :

- x est la donnée relative à la position primaire, c'est-à-dire la température moyenne relevée dans l'une des cinq villes de référence,
- y est l'indice que l'on cherche à calculer pour la position secondaire,

- a et b sont des coefficients constants prédéterminés en fonction de la position secondaire.

Les coefficients a et b seront propres à chacune des positions secondaires que l'on cherche à calculer. On donne dans le tableau ci-après des exemples de coefficients a et b utilisables pour les quatre positions secondaires précitées.

Tableau 1 :

| coefficient de corrélation pour le calcul des indices | | | |
|---|---|---|---|
| Région | Station de référence | coefficient a | coefficient b |
| Ile de France | Paris-Orly | 1,0000 | 0,0000 |
| Languedoc-Roussillon | Lyon | 0,7929 | 4,5209 |
| Limousin | Bordeaux | 0,9467 | - 2,0800 |
| Lorraine | Paris-Orly | 1,0099 | - 1,5838 |

Dans le tableau 2 suivant, on donne les valeurs trimestrielles des indices locaux pour les trimestres 1 et 2 des hivers 1999 et 2000 pour les villes de Montpellier, Limoges et Nancy. Plus précisément, on fournit d'une part les indices réels calculés à partir de mesures de températures directes dans ces villes, et d'autre part les indices estimés au moyen de l'équation de régression précitée avec les coefficients a et b à partir des villes de référence précitées.

Tableau 2 :

| indice réel et estimé pour les villes de Montpellier, Limoges et Nancy. | | | | | |
|---|---|---|---|---|---|
| Ville | Année | Trimestre 1 | | Trimestre 4 | |
| | | réel | estimé | réel | estimé |
| Montpellier | 1999 | 9,1456 | 9,1902 | 10,8707 | 10,6702 |
| | 2000 | 9,0505 | 9,1894 | 12,3174 | 12,2922 |
| Limoges | 1999 | 5,6133 | 5,8712 | 7,2935 | 7,4128 |
| | 2000 | 5,6044 | 5,4915 | 8,7337 | 8,6414 |
| Nancy | 1999 | 4,6133 | 4,8842 | 5,9511 | 6,0159 |
| | 2000 | 5,0055 | 4,6345 | 8,4478 | 7,6076 |

On voit que, dans la plupart des cas, l'indice estimé est très proche de l'indice réel. Lorsque le degré de précision attendu le permet, il est donc plus simple et plus rapide de calculer l'indice de chacune des villes des vingt-deux régions au moyen de l'équation de régression précitée et de l'indice de l'une des villes de référence plutôt que d'effectuer le calcul à partir des relevés de températures effectués dans celle ville.

Ce mode de réalisation du procédé pour fournir un indice météorologique est mis en oeuvre au moyen d'une installation informatisée analogue à celle qui a été décrite à la figure 1 en référence au premier mode de réalisation mais programmée de façon adaptée à ce dernier mode.

On va maintenant décrire la méthode pour la sélection des villes de référence et le calcul des coefficients a et b.

Tout d'abord, on définit le paramètre R appelé coefficient de corrélation linéaire. Il mesure exclusivement le caractère plus ou moins linéaire d'une relation et est compris entre 0 et 1. En cas de linéarité parfaite, R vaut 1. On considère ici qu'au-delà d'une valeur de 0,85, on se situe dans un cas de corrélation linéaire.

Une première étape consiste à évaluer les corrélations des températures moyennes entre les vingt-deux villes de référence en calculant les coefficients de corrélation linéaire simple R. Ces corrélations sont calculées ici à partir des données quotidiennes des deux derniers hivers (octobre-novembre-décembre 1999 et 2000 d'une part, et janvier-février-mars 2000 et 2001 d'autre part). On réalise ainsi un tableau matriciel présentant en abscisse et en ordonnée les vingt-deux villes et comprenant les coefficients R associés. On donne ci-dessous dans le tableau 3 un extrait de ce tableau montrant les coefficients de corrélation entre les seules villes de Marignane, Paris-Orly et Lille.

Tableau 3 :

| coefficient de corrélation linéaire entre trois des vingt-deux villes. | | | |
|---|---|---|---|
| | Marignane | Paris-Orly | Lille |
| Marignane | - | | |
| Paris Orly | 0,70 | 0,90 | - |
| Lille | 0,56 | 0,94 | - 0,89 |

On procède ensuite de la façon suivante : on classe les vingt-deux villes par ordre décroissant de population. Paris-Orly est donc la ville la plus peuplée, suivie de Lyon, Marignane (Marseille) etc,... En dernier, on trouve la ville d'Ajaccio.

Afin de déterminer les villes à associer entre elles, on procède comme suit.

On sélectionne en premier la ville la plus peuplée, à savoir Paris-Orly.

Puis on cherche parmi les villes restantes celles qui ont avec cette dernière un coefficient de corrélation linéaire R supérieur à un seuil prédéterminé, par exemple de 0,90. Les villes ainsi retenues auront pour ville de référence la ville la plus peuplée sélectionnée, c'est-à-dire Paris-Orly.

Parmi les villes restantes, on sélectionne celle qui a la population la plus importante. Il s'agit de la ville de Lyon.

Puis on cherche parmi les villes restantes celles qui ont avec cette dernière un coefficient de corrélation linéaire R supérieur au seuil de 0,90. Les villes ainsi retenues auront pour ville de référence la ville de Lyon.

On renouvelle ensuite encore ce cycle en identifiant Bordeaux comme ville la plus peuplée restante et en cherchant les villes ayant avec celle-ci un coefficient de corrélation supérieur à 0,9.

Dans une étape ultérieure, on identifie Strasbourg comme ville la plus peuplée restante ainsi que les villes corrélées avec celle-ci et, enfin, il demeure la ville d'Ajaccio qui est uniquement corrélée avec elle-même.

Dans une variante, on peut considérer un seuil de 0,95 plutôt qu'un seuil de 0,90 pour le coefficient de corrélation linéaire R. Dans ce cas, on constate que le nombre de villes de référence passe de 5 à 12 ou 14. En effet, le nombre de positions primaires dépend du seuil choisi.

Ensuite les coefficients a et b associés à chacune des vingt-deux villes pour son équation de régression sont calculés à partir des données relatives à la ville considérée et à sa ville de référence, selon les techniques statistiques habituelles qui ne seront pas décrites ici.

Dans une variante de ce procédé, on peut se dispenser de considérer les vingt-deux villes par référence à leur population et étudier directement les coefficients de corrélation linéaires R entre les vingt-deux villes pour sélectionner un groupe de villes pertinentes, c'est-à-dire présentant la corrélation la plus étroite avec les autres villes. Selon cette variante du procédé, on peut être amené à conclure par exemple que deux stations météorologiques suffisent pour représenter les vingt-deux régions économiques. Il s'agit des stations de Paris-Orly et Marseille Marignane. Bien entendu, cette sélection est fonction de la précision requise. Chacune des vingt-deux villes se trouve ainsi reliée à l'une de ces deux stations. On détermine ensuite les coefficients a et b selon les techniques classiques.

Dans une autre variante, on peut mettre en oeuvre entre les vingt-deux villes et les villes sélectionnées pour former les positions primaires non pas une corrélation linéaire simple mais une corrélation linéaire multiple. Par exemple, si le nombre de villes de référence se ramène à deux, l'équation de régression utilisée pour chacune des vingt-deux villes sera du type :

$$y = a_1 \, x_1 + a_2 \, x_2 + B$$

où :

- y est l'indice relatif à la ville,
- $x_1$ et x sont les données relatives aux villes de référence, et
- $a_1$, $a_2$ et B sont des constantes.

Pour sélectionner parmi les vingt-deux villes celles qui serviront de référence, on met en oeuvre des techniques analogues à celles qui viennent d'être décrites en remplaçant cependant les coefficients de corrélation linéaire simple R par des coefficients de corrélation linéaire multiple. Le calcul des coefficients $a_1$, $a_2$ et B est effectué selon les techniques classiques en la matière.

Bien que ce deuxième mode de réalisation du procédé de l'invention ne fasse pas intervenir des données de nature démographique et/ou économique dans les calculs proprement dits, il pourrait être envisagé d'intégrer de telles données dans les calculs comme on l'a fait dans le premier mode de réalisation pour pondérer certaines des données météorologiques.

Ici encore, ce deuxième mode de réalisation peut être mis en oeuvre par des moyens informatiques automatisés. On peut prévoir un support d'enregistrement amovible ou installé à demeure dans ces moyens et comprenant un programme apte à mettre en oeuvre les différentes étapes de ce procédé.

Les indices obtenus au moyen de l'invention peuvent entrer dans des produits d'assurance, permettant aux intervenants de s'assurer contre les aléas climatiques et météorologiques. Il s'agit ainsi pour une entreprise de couvrir son activité contre les aléas météorologiques susceptibles d'avoir une influence sur son activité industrielle.

Les indices peuvent rentrer dans un contrat à terme, tel qu'un contrat à option ou un contrat de type *swap* entre une contrepartie 1 et une contrepartie 2 représentées par exemple par un utilisateur d'énergie et un producteur d'énergie respectivement. En fonction de l'évolution de l'indice prévu au contrat à une date donnée, la contrepartie 1 peut être amenée à payer une certaine somme à la contrepartie 2 ou inversement, suivant un schéma aujourd'hui classique. De tels contrats peuvent faire l'objet d'une cotation sur les marchés financiers.

Bien entendu, ces indices pourront être diffusés par tout moyen de communication adapté et notamment par Internet. De même l'installation qui a été décrite en référence aux modes de réalisation pourra faire intervenir l'obtention et/ou la consultation de données à distance par Internet en complément ou en alternative à l'obtention et à la consultation de données enregistrées dans une mémoire de l'installation.

Les différentes positions ou zones géographiques telles que les régions peuvent concerner différents Etats limitrophes tout en étant voisines les unes des autres.

**Revendications**

1. Procédé pour fournir un indice météorologique, **caractérisé en ce qu'**il comprend les étapes consistant à :

   - mesurer au moins un phénomène météorologique à au moins une position géographique (6) pour obtenir au moins une donnée météorologique;
   - obtenir au moins une donnée dite humaine liée à au moins une grandeur de nature économique ou démographique concernant au moins une zone géographique (4) incluant la position respective (6); et
   - calculer un indice à partir de ces données.

2. Procédé selon la revendication 1, **caractérisé en ce que** l'obtention met en oeuvre l'obtention de plusieurs données météorologiques concernant respectivement plusieurs positions géographiques (6).

3. Procédé selon l'une quelconque des revendications 1 à 2, **caractérisé en ce que** l'obtention met en oeuvre l'obtention de plusieurs données humaines concernant respectivement plusieurs zones (4).

4. Procédé selon l'une quelconque des revendications 1 à 3, **caractérisé en ce que** le calcul met en oeuvre le calcul d'une moyenne des données météorologiques pondérées par les données humaines.

5. Procédé selon l'une quelconque des revendications 1 à 4, **caractérisé en ce que** la ou chaque donnée météorologique est une moyenne de données météorologiques élémentaires concernant une période prédéterminée.

6. Procédé selon l'une quelconque des revendications 1 à 5, **caractérisé en ce que** le calcul met oeuvre le calcul de plusieurs indices élémentaires au moyen des données météorologiques et humaines, et le calcul de l'indice à partir des indices élémentaires, de préférence sous la forme d'une moyenne des indices élémentaires.

7. Procédé selon la revendication 6, **caractérisé en ce que** les indices élémentaires concernent des périodes différentes.

8. Procédé selon l'une quelconque des revendications 5 ou 7, **caractérisé en ce que** la ou les périodes sont choisies dans le groupe consistant en: une année, un semestre, un trimestre, un mois, une semaine et un jour.

9. Procédé selon l'une quelconque des revendications 1 à 8, **caractérisé en ce que** la ou l'une des données météorologiques est en relation avec :

   - une température de l'air atmosphérique;

-   un degré d'humidité de l'air atmosphérique;
-   une quantité de précipitation;
-   une quantité de brouillard;
-   une température d'une étendue d'eau; ou
-   une vitesse du vent.

10. Procédé selon l'une quelconque des revendications 1 à 9, **caractérisé en ce que** la zone géographique est choisie parmi le groupe consistant en: un Etat, une région (4), un département, une municipalité, une commune.

11. Procédé selon l'une quelconque des revendications 1 à 10, **caractérisé en ce que** la position géographique (6) est une agglomération, de préférence l'agglomération pour laquelle la grandeur atteint un extremum par rapport à d'autres agglomérations de la zone correspondante (4).

12. Procédé selon l'une quelconque des revendications 1 à 11, **caractérisé en ce que** la grandeur est la population de la zone géographique (4).

13. Installation (10) pour fournir un indice météorologique, **caractérisée en ce qu'**elle comprend :

-   des moyens (12) pour obtenir au moins une donnée météorologique liée à au moins un phénomène météorologique se produisant à au moins une position géographique (6);
-   des moyens (16) pour obtenir au moins une donnée dite humaine liée à au moins une grandeur de nature économique ou démographique concernant au moins une zone géographique (4) incluant la position respective (6); et
-   des moyens (14) de calcul d'un indice à partir de ces données.

14. Installation selon la revendication 13, **caractérisée en ce qu'**elle comprend des moyens (12) de mesure du phénomène météorologique.

15. Dispositif informatique automatisé (14) pour fournir un indice météorologique, **caractérisé en ce qu'**il est programmé pour mettre en oeuvre les étapes consistant à :

-   obtenir au moins une donnée météorologique liée à au moins un phénomène météorologique se produisant à au moins une position géographique (6);
-   obtenir au moins une donnée dite humaine liée à au moins une grandeur de nature économique ou démographique concernant au moins une zone géographique (4) incluant la position respective; et
-   calculer un indice à partir de ces données.

16. Support d'enregistrement (14) d'un programme informatique pour fournir un indice météorologique, **caractérisé en ce que** le programme est apte à mettre en oeuvre les étapes consistant à :

-   obtenir au moins une donnée météorologique liée à au moins un phénomène météorologique se produisant à au moins une position géographique (6);
-   obtenir au moins une donnée dite humaine liée à au moins une grandeur de nature économique ou démographique concernant au moins une zone géographique (4) incluant la ou les positions respectives (6); et
-   calculer un indice à partir de ces données.

17. Procédé pour fournir au moins un indice météorologique, **caractérisé en ce qu'**il comprend les étapes consistant à :

-   mesurer au moins un phénomène météorologique à au moins une position géographique primaire (6) pour obtenir au moins une donnée; et
-   calculer au moins un indice météorologique relatif à au moins une position géographique secondaire (6) à partir de la donnée, des données, ou de l'une des données.

18. Procédé selon la revendication 17 **caractérisé en ce qu'**il comprend les étapes préalables consistant à :

-   étudier un degré de corrélation entre d'une part des données initiales relatives aux positions primaires et d'autre part des indices initiaux relatifs aux positions secondaires; et

- associer à chaque position secondaire une des positions primaires, l'étape de calcul étant mise en oeuvre en calculant chaque indice à partir de la seule donnée ou des seules données correspondant à la position primaire associée.

19. Procédé selon l'une quelconque des revendications 17 à 18 **caractérisé en ce que** l'étape d'obtention met en oeuvre l'obtention d'au moins deux données concernant deux positions géographiques primaires respectives.

20. Procédé selon la revendication 19, **caractérisé en ce que** l'étape de calcul met en oeuvre le calcul de l'indice à partir d'une seule des deux données, cette donnée concernant l'une prédéterminée des positions géographiques.

21. Procédé selon l'une quelconque des revendications 18 à 20 **caractérisé en ce qu'**il est mis en oeuvre de façon à fournir au moins deux indices relatifs à deux positions géographiques secondaires respectives (6).

22. Procédé selon l'une quelconque des revendications 18 à 21, **caractérisé en ce qu'**il est mis en oeuvre de façon à fournir un nombre d'indices supérieur au nombre de données.

23. Procédé selon l'une quelconque des revendications 18 à 22 **caractérisé en ce que** l'étape de calcul met en oeuvre le calcul du ou de chaque indice de la ou chaque position géographique au moyen d'une formule du type :

$$y = ax + b$$

où

x est la donnée ou l'une des données ;
y est l'indice ; et
a et b sont des coefficients prédéterminés pour la position géographique.

24. Installation (10) pour fournir au moins un indice météorologique **caractérisée en ce qu'**elle comprend :

- des moyens (12) pour obtenir au moins une donnée liée à au moins un phénomène météorologique se produisant à au moins une position géographique primaire (6); et
- des moyens de calcul d'au moins un indice météorologique relatif à au moins une position géographique secondaire (6) à partir de la ou des données ou de l'une des données.

25. Dispositif informatique automatisé (14) pour fournir un indice météorologique, **caractérisé en ce qu'**il est programmé pour mettre en oeuvre les étapes consistant à :

- obtenir au moins une donnée liée à au moins un phénomène météorologique se produisant à au moins une position géographique primaire (6); et
- calculer au moins un indice météorologique relatif à au moins une position géographique secondaire (6) à partir de la donnée, des données ou de l'une des données.

26. Support d'enregistrement (14) d'un programme informatique pour fournir un indice météorologique, **caractérisé en ce que** le programme est apte à mettre en oeuvre les étapes consistant à :

- obtenir au moins une donnée liée à au moins un phénomène météorologique se produisant à au moins une position géographique primaire; et
- calculer au moins un indice météorologique relatif à au moins une position géographique secondaire à partir de la donnée, des données ou de l'une des données.

FIG_1

**Office européen des brevets**

## RAPPORT DE RECHERCHE EUROPEENNE

Numéro de la demande

EP 02 29 2066

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | DE 37 06 165 C (HUGER BAROMETER GMBH) 9 juin 1988 (1988-06-09)<br><br>* ensemble du brevet *<br>* figure 1 *<br>--- | 1-9, 13-17, 24,25 | G06F17/60 G01W1/06 |
| A | PATENT ABSTRACTS OF JAPAN & JP 11 299351 A (OMRON CORP.), 2 novembre 1999 (1999-11-02) * abrégé *<br>--- | 1-10, 13-17, 24,25 | |
| A | DE 39 09 525 A (NATIONALES LANDWIRTSCHAFTLICHES FORSCHUNGSZENTRUM, JP) 30 novembre 1989 (1989-11-30) * ensemble du brevet * * figures 1-6 *<br>--- | 1,2, 5-10,13, 14 | |
| A | WO 99 24930 A (ALBERT EINSTEIN HEALTHCARE NETWORK) 20 mai 1999 (1999-05-20)<br><br>* ensemble du brevet *<br>----- | 1,2, 5-10, 13-16 | |

DOMAINES TECHNIQUES RECHERCHES (Int.Cl.7)

G06F
A01G
G01W

Le présent rapport a été établi pour toutes les revendications

| Lieu de la recherche | Date d'achèvement de la recherche | Examinateur |
|---|---|---|
| LA HAYE | 27 novembre 2002 | Visser, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**                     EP 02 29 2066

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-11-2002

| Document brevet cité au rapport de recherche | | Date de publication | Membre(s) de la famille de brevet(s) | | Date de publication |
|---|---|---|---|---|---|
| DE 3706165 | C | 09-06-1988 | DE | 3706165 C1 | 09-06-1988 |
| JP 11299351 | A | 02-11-1999 | AUCUN | | |
| DE 3909525 | A | 30-11-1989 | JP | 1300830 A | 05-12-1989 |
| | | | JP | 1748467 C | 08-04-1993 |
| | | | JP | 4051129 B | 18-08-1992 |
| | | | DE | 3909525 A1 | 30-11-1989 |
| | | | NL | 8900624 A ,B, | 18-12-1989 |
| WO 9924930 | A | 20-05-1999 | US | 6055480 A | 25-04-2000 |
| | | | AU | 1394399 A | 31-05-1999 |
| | | | CA | 2309687 A1 | 20-05-1999 |
| | | | EP | 1029303 A1 | 23-08-2000 |
| | | | JP | 2001523008 T | 20-11-2001 |
| | | | WO | 9924930 A1 | 20-05-1999 |

EPO FORM P0460

Pour tout renseignement concernant cette annexe : voir Journal Officiel de l'Office européen des brevets, No. 12/82